# EUROPÄISCHE PATENTSCHRIFT

(11) **EP 2 250 392 B1**
(45) Veröffentlichungstag und Bekanntmachung des Hinweises auf die Patenterteilung: **16.09.2015**
(21) Anmeldenummer: 09709157.3
(22) Anmeldetag: 29.01.2009
(51) Int. Cl.: F16F 15/02

(54) **AKTIVES SCHWINGUNGSISOLATIONSSYSTEM**
ACTIVE VIBRATION ISOLATION SYSTEM
SYSTÈME ACTIF D'ISOLATION CONTRE LES VIBRATIONS

(30) Priorität: 04.02.2008 DE 102008007712
(43) Veröffentlichungstag der Anmeldung: 17.11.2010
(73) Patentinhaber: Integrated Dynamics Engineering GmbH, 65479 Raunheim (DE)
(72) Erfinder: HEILAND, Peter, 65479 Raunheim (DE)
(74) Vertreter: Herden, Andreas F.
(86) Internationale Anmeldenummer: PCT/EP2009/000563
(87) Internationale Veröffentlichungsnummer: WO 2009/097994

(56) Entgegenhaltungen:
- EP-A- 1 870 614
- EP-A- 1 995 492
- DE-A1- 10 344 558
- DE-A1- 10 356 561
- US-A- 4 796 873
- BARZILAI A ET AL: "Improving the performance of geophone through capacitive position sensing and feedback" PROCEEDINGS OF THE ASME DYNAMIC SYSTEMS AND CONTROL DIVISION, XX, XX, 15. November 1998 (1998-11-15), Seiten 629-636, XP002998735

## Beschreibung

### Gebiet der Erfindung

Die Erfindung betrifft ein aktives Schwingungsisolationssystem mit einem Geophonsensor.

### Hintergrund der Erfindung

Schwingungsisolationssysteme sind bekannt. Beispielsweise zeigt die DE 69817750 T2 (Erfinder: Eric Loopstra, Peter Heiland) ein Schwingungsisolationssystem, welches insbesondere zur schwingungsisolierten Lagerung eines Lithographiegerätes vorgesehen ist. Dabei wird eine zu lagernde Last, welche typischerweise ein Tisch und darauf gelagerte Bauelemente wie Fertigungsanlagen umfasst, auf Luftlagern gelagert.

Die Dokumente US 4 796 873 A und EP 1 870 614 A1 zeigen Schwingungsisolationssysteme.

Das Dokument DE 103 44 558 A1 zeigt ein Geophon mit einer kapazitiven Lageerfassung.

Das Dokument Barzilai A. et al.: "Improving the performance of geophone through capacitive position sensing and feedback" PROCEEDING OF THE ASME DYNAMIC SYSTEMS AND CONTROL DIVISION, XX, XX, 15. November 1998 (1998-11-15), Seiten 629-636, XP002998735 bezieht sich auf einen kapazitiven Geophonsensor, welcher auch auf die Verwendung im tieffrequenten Bereich abgestimmt sein soll.

Hinweise auf die Verwendung des Sensors in einem Schwingungsisolationssystem liefern die beiden letztgenannten Dokumente nicht.

Neben einer Lagerung mit möglichst mechanisch geringer Steifigkeit weisen aktive Schwingungsisolationssysteme Sensoren und Aktören auf, mit denen gezielt von außen in das System eindringenden Schwingungen entgegengesteuert wird. Die Sensoren erfassen dabei Bewegungen der zu lagernden Last und über eine Regeleinrichtung werden Kompensationssignale generiert, mit denen Aktoren angesteuert und so Kompensationsbewegungen generiert werden.

Die Anforderungen an Schwingungsisolationssysteme nehmen mit zunehmender Miniaturisierung in der Halbleiterindustrie immer weiter zu.

Als Sensoren sind Geophonsensoren bekannt. Darunter versteht man elektro-mechanische Wandler, die Schwingungen in analoge oder digitale Signale umwandeln. Geophone bestehen zumeist im Wesentlichen aus einer Spule und einem Permanentmagneten, wobei die Spule über eine Feder mit dem Permanentmagneten gekoppelt ist. Bei einer durch eine Schwingung verursachte Relativbewegung zwischen Spule und Magnet wird in die Spule eine Spannung induziert, welche proportional zur Geschwindigkeit der Bewegung ist. Derartige bekannte Geophone können in der Regel nicht für Frequenzen von weniger als 1 Hz verwendet werden.

Zur Kompensation von tieffrequenteren Schwingungen weisen bekannte aktive Schwingungsisolationssysteme daher in der Regel neben Geophonsensoren Abstandssensoren auf. Derartige Abstandssensoren, welche beispielsweise optisch oder kapazitiv arbeiten, sind auch zur Erfassung von tieferfrequenten Schwingungen geeignet. Da derartige Abstandssensoren sich allerdings nicht zum Messen von höherfrequenten Schwingungen eignen, kann auf die Verwendung von Geophonen in der Regel nicht verzichtet werden.

Eine derartige bekannte Anordnung hat den Nachteil, dass sie, sowohl was die Anzahl und Ausgestaltung der elektromechanischen Komponenten als auch was die Ausgestaltung der Regelungselektronik angeht, sehr aufwändig ist.

Insbesondere ist die Regelung im Bereich der Übergabefrequenz zwischen den verschiedenen Sensortypen schwierig.

### Aufgabe der Erfindung

Der Erfindung liegt demgegenüber die Aufgabe zugrunde, die genannten Nachteile des Standes der Technik zumindest zu reduzieren.

Insbesondere ist es eine Aufgabe der Erfindung, auf die Verwendung von Abstandssensoren in einem aktiven Schwingungsisolationssystem verzichten zu können.

Eine weitere Aufgabe ist es, eine preiswerte und zuverlässige Schwingungskompensation bis in tieffrequente Bereiche von unter 0,1 Hz bereitstellen zu können.

### Zusammenfassung der Erfindung

Die Aufgabe der Erfindung wird bereits durch ein aktives Schwingungsisolationssystem sowie durch ein Verfahren zur aktiven Regelung eines Schwingungsisolationssystems nach einem der unabhängigen Ansprüche gelöst.

Bevorzugte Ausführungsformen und Weiterbildungen der Erfindung sind den jeweiligen Unteransprüchen zu entnehmen.

Danach ist ein aktives Schwingungsisolationssystem vorgesehen, welches zumindest einen Geophonsensor und eine Regeleinrichtung umfasst, über welche die Signale des Geophonsensors empfangen und Kompensationssignale berechnet werden können.

Hierzu ist die Regeleinrichtung mit zumindest einem Aktor verbunden, der mit den Korrektursignalen zur aktiven Schwingungsdämpfung angesteuert wird. Der Geophonsensor ist in einem Frequenzbereich ab wenigstens 0,1 Hz wirksam, wobei die Regeleinrichtung Korrektursignale für Schwingungen ab wenigstens 0,1 Hz erzeugt.

Unter der Wirksamkeit des Sensors wird eine Auflösung von noch mindestens 1 * 10⁻⁷ m/s * Hz^{-1/2} verstanden.

Die Erfinder haben herausgefunden, dass über einen nach dem kapazitiven Messprinzip arbeitenden Geophonsensor eine breitbandige Schwingungsmessung, insbesondere in einem Bereich von 30 mHz bis 50 Hz, möglich ist.

Die Verwendung des Geophonsensors zur Erfassung von Schwingungen auch unterhalb von 1 Hz ermöglicht es, dass auf zusätzliche Abstandssensoren verzichtet werden kann.

Bei einer bevorzugten Ausführungsform der Erfindung hat der Geophonsensor bei 30 mHz noch eine Auflösung von mindestens 10⁻⁷ m/s * Hz^{-1/2}.

Insbesondere durch Bereitstellung eines kapazitiven Geophonsensors, welcher in einem Frequenzbereich zwischen 50 mHz und 30 Hz eine Auflösung von mindestens 10⁻⁶ m/s * Hz⁻² aufweist, kann eine breitbandige Regelung bereitgestellt werden.

Bei einer bevorzugten Ausführungsform der Erfindung sind über die Regeleinrichtung Korrektursignale in zumindest drei, besonders bevorzugt in sechs Freiheitsgraden berechenbar. Neben einer Berechnung der drei Translations-Freiheitsgrade kann durch Berücksichtigung auch der drei Rotations-Freiheitsgrade eine noch genauere Regelung bereitgestellt werden.

Bei einer Weiterbildung der Erfindung weist die Regeleinrichtung eine digital oder analog ausgebildete Regelschleife zur Korrektur von Sensorsignalen auf, mit welcher die Signale des Geophonsensors von Schwingungen im unteren Bereich, vorzugsweise bis in einen tieffrequenten Bereich von wenigstens 1 mHz korrigiert werden.

Die Erfinder haben herausgefunden, dass selbst in Bereichen unter 30 mHz, in welchen auch ein kapazitiver Geophonsensor nur noch eine geringe Auflösung und eine hohes Rauschen aufweist, mit geeigneter Regelungselektronik dennoch eine hinreichend genaue Messung durchgeführt werden kann.

Gleiches ist auch im oberen Grenzbereich der Frequenzcharakteristik des Geophonsensors möglich. So kann bei einem an sich bis zumindest 50 Hz wirksamen Geophonsensor über eine entsprechende digitale oder analoge Regelschleife zur Korrektur der Sensorsignale eine Wirksamkeit des Systems für Schwingungen bis 100 Hz, vorzugsweise bis zumindest 200 Hz erreicht werden.

Bei einer bevorzugten Ausführungsform der Erfindung erfolgt so die aktive Regelung des Schwingungsisolationssystems ausschließlich über Geophonsensoren.

Die Erfindung betrifft des Weiteren ein Verfahren zur aktiven Regelung eines Schwingungsisolationssystems.

Dabei werden Messungen in einem Frequenzbereich zwischen mindestens 30 mHz und 50 Hz mittels zumindest eines kapazitiven Geophonsensors gemessen.

Auf Basis der Sensorsignale werden Kompensationssignale in zumindest drei Freiheitsgraden berechnet, mit denen Aktoren zur aktiven Schwingungskompensation angesteuert werden.

Die Berechnung der Kompensationssignale erfolgt erfindungsgemäß ausschließlich auf Basis der Signale der Geophonsensoren.

Bei einer Weiterbildung des Verfahrens werden mit dem Geophonsensor Schwingungen in einem Frequenzbereich zwischen 1 mHz und 200 Hz gemessen und im Randbereich des Frequenzbereiches wird mittels einer Elektronik eine Korrektur der Messsignale vorgenommen, wodurch die Generierung von Kompensationssignalen ebenfalls in einem Frequenzbereich von 1 mHz bis 200 Hz möglich wird.

### Kurzbeschreibung der Zeichnungen

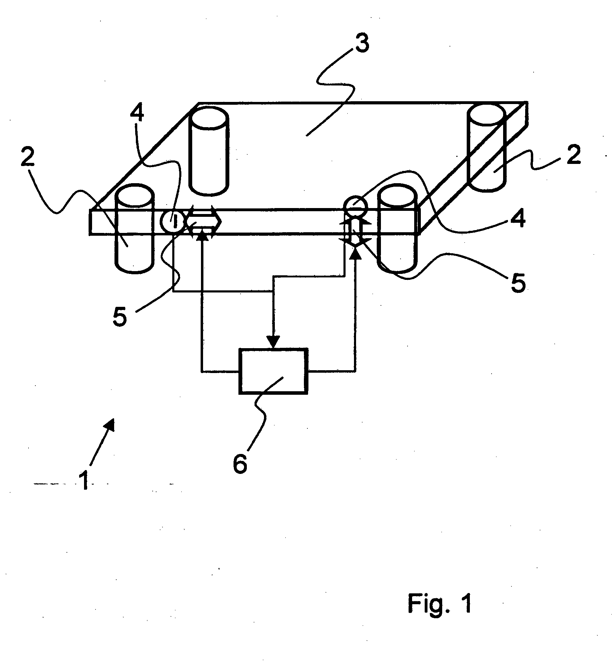

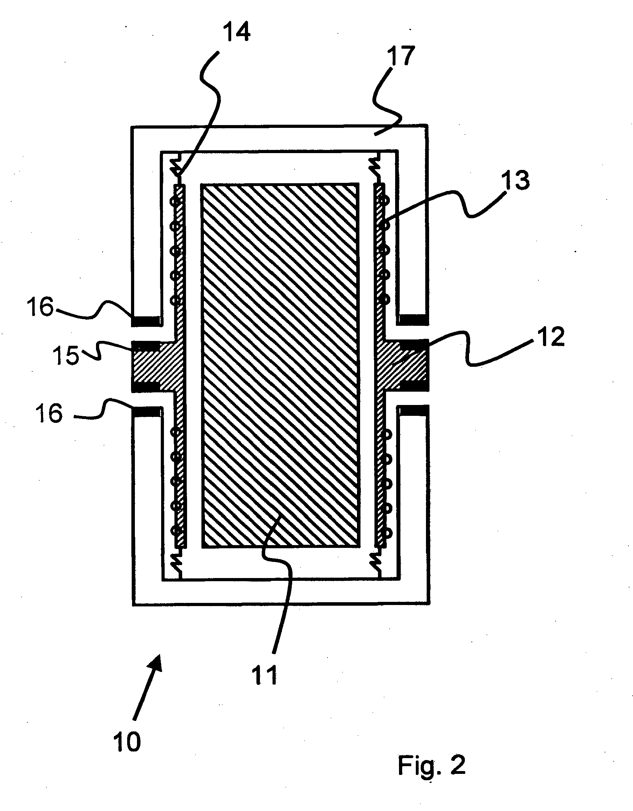

Die Erfindung soll im Folgenden anhand eines schematisch dargestellten Ausführungsbeispiels Bezug nehmend auf die Zeichnungen Fig. 1 und Fig. 2 näher erläutert werden.
- Fig. 1: zeigt schematisch ein aktives Schwingungsisolationssystem,
- Fig. 2: zeigt eine schematische Schnittansicht durch einen kapazitiven Geophonsensor.

### Detaillierte Beschreibung der Zeichnungen

Fig. 1 zeigt schematisch die wesentlichen Komponenten eines aktiven Schwingungsisolationssystems 1.

Das Schwingungsisolationssystem 1 umfasst eine schwingungsisoliert zu lagernde Last 3, beispielsweise in Form eines Tisches, auf dem schwingungsisoliert zu lagernde Geräte (nicht dargestellt) plaziert werden können. Die Last ist auf Lagern, beispielsweise auf Luftlagern, gelagert.

Zur aktiven Schwingungskompensation verfügt das Schwingungsisolationssystem über Geophonsensoren 4, welche in diesem Ausführungsbeispiel nur für zwei Translations-Freiheitsgrade dargestellt sind. Über die Geophonsensoren 4 können Schwingungen der zu isolierenden Last 3 in Signale umgewandelt und an eine Regeleinrichtung 6 weitergegeben werden. Die Regeleinrichtung 6 errechnet aus den Signalen der Geophonsensoren 4 Kompensationssignale zur Ansteuerung der Aktoren 5, mit denen eine aktive Schwingungskompensation vorgenommen werden kann.

Es versteht sich, dass in einem alternativen Ausführungsbeispiel Geophone nicht nur an der zu lagernden Last 3, sondern auch oder ausschließlich an der Basis des Schwingungsisolationssystems starr mit dem Boden gekoppelt angebracht sein können (nicht dargestellt).

Die aktive Schwingungskompensation erfolgt ausschließlich auf Basis der Signale der Geophonsensoren.

Fig. 2 zeigt schematisch einen kapazitiven Geophonsensor 10 in der Schnittansicht.

Der kapazitive Geophonsensor 10 umfasst einen Magneten 11 und einen Zylinder 12, welcher mit einer Spule 13 versehen ist. Der Zylinder 12 ist über edern 14 mit dem Gehäuse 17 des Geophonsensors 10 verbunden.

Bei Schwingungen des Gehäuses 17 kommt es zu einer Verschiebung des Zylinders 12 relativ zum Gehäuse 17.

Diese Verschiebung wird kapazitiv über die bewegliche Elektrode 15 am Zylinder 12 und die fest am Gehäuse angebrachten Elektroden 16 erfasst.

Mit dem kapazitiven Geophonsensor kann in einem breiten Frequenzbereich von 30 mHz bis 50 Hz eine Auflösung von 5 * 10⁻⁶ m/sec x Hz^{-1/2} erreicht werden. Über eine Korrekturelektronik ist sogar eine Auswertung von Sensorsignalen unterhalb von 30 mHz bis hin zu 1 mHz und je nach Randbedingungen sogar darunter möglich.

Über die Spule 13 und den Magneten 11 können in diesem Ausführungsbeispiel Rückstellkräfte erzeugt werden.

Aber auch eine Ausgestaltung, bei der gleichzeitig die Induktivität in der Spule gemessen wird, also gewissermaßen ein Hybridsensor arbeitender Sensor, ist denkbar.

Durch das erfindungsgemäße Regelkonzept kann auf eine eigene Regelschleife mit Abstandssensoren verzichtet werden.

Insbesondere kann auf die relativ aufwändige Frequenzbandkorrektur, welche für herkömmliche induktiv arbeitende Geophone vorgesehen ist, verzichtet werden.

Es versteht sich, dass der Gegenstand der Erfindung nicht auf eine Kombination vorstehend beschriebener Merkmale beschränkt ist, sondern dass der Fachmann sämtliche Merkmale, soweit dies sinnvoll ist, kombinieren wird.

### Bezugszeichenliste

- 1: Schwingungsisolationssystem
- 2: Lager
- 3: Last
- 4: Geophonsensor
- 5: Aktor
- 6: Regeleinrichtung
- 10: Geophonsensor
- 11: Magnet
- 12: Zylinder
- 13: Spule
- 14: Feder
- 15: Elektrode
- 16: Elektrode
- 17: Gehäuse

## Patentansprüche

1. Aktives Schwingungsisolationssystem, umfassend zumindest einen Geophonsensor, eine Regeleinrichtung, wobei die Regeleinrichtung mit dem zumindest einen Geophonsensor und mit zumindest einem Aktor zur aktiven Schwingungsdämpfung verbunden ist, wobei der Geophonsensor als kapazitiver Sensor ausgebildet ist, wobei über den Geophonsensor Schwingungen der zu isolierenden Last erfasst und in Signale umgewandelt werden, welche an die Regeleinrichtung weiter gegeben werden, wobei die Regeleinrichtung aus den Signalen des Geophonsensors Kompensationssignale für Ansteuerung des Aktor errechnet, wobei der Geophonsensor in einem Frequenzbereich ab wenigstens 0,1 Hz wirksam ist und die Regeleinrichtung Korrektursignale für Schwingungen ab wenigstens 0,1 Hz erzeugt.

2. Aktives Schwingungsisolationssystem nach Anspruch 1, **dadurch gekennzeichnet, dass** der Geophonsensor in einem Frequenzbereich ab wenigstens 30 mHz wirksam ist.

3. Aktives Schwingungsisolationssystem nach einem der vorstehenden Ansprüche, **dadurch gekennzeichnet, dass** der Geophonsensor bei 30 mHz eine Auflösung von mindestens 10⁻⁷ m/s * Hz^{-1/2} aufweist.

4. Aktives Schwingungsisolationssystem nach einem der vorstehenden Ansprüche, **dadurch gekennzeichnet, dass** der Geophonsensor in einem Freqenzbereich zwischen 50 mHz und 30 Hz eine Auflösung von mindestens 10⁻⁶ m/s * Hz^{-1/2} aufweist.

5. Aktives Schwingungsisolationssystem nach einem der vorstehenden Ansprüche, **dadurch gekennzeichnet, dass** über die Regeleinrichtung Korrektursignale in zumindest drei, vorzugsweise in sechs Freiheitsgraden berechenbar sind.

6. Aktives Schwingungsisolationssystem nach einem der vorstehenden Ansprüche, **dadurch gekennzeichnet, dass** die Regeleinrichtung eine digitale oder analoge Regelschleife zur Korrektur der Sensorsignale aufweist und Korrektursignale für Schwingungen ab wenigstens 1 mHz erzeugt.

7. Aktives Schwingungsisolationssystem nach einem der vorstehenden Ansprüche, **dadurch gekennzeichnet, dass** der zumindest eine Geophonsensor in einem Frequenzbereich bis zumindest 30 Hz, vorzugsweise bis zumindest 50 Hz wirksam ist.

8. Aktives Schwingungsisolationssystem nach einem der vorstehenden Ansprüche, **dadurch gekennzeichnet, dass** die aktive Regelung ausschließlich über Geophonsensoren erfolgt.

9. Verfahren zur aktiven Regelung eines Schwingungsisolationssystems, insbesondere eines Schwingungsisolationssystems nach einem der vorstehenden Ansprüche, umfassend die Schritte:
- Messen von Schwingungen in einem Frequenzbereich zwischen mindestens 30 mHz und 50 Hz mittels zumindest eines kapazitiven Geophonsensors, wobei die Messung der Schwingungen ausschließlich auf Basis der Signale des oder der Geophonsensoren erfolgt,
- Berechnen von Kompensationssignalen in zumindest drei Freiheitsgraden,
- Ansteuern von Aktoren zur Schwingungskompensation.

10. Verfahren zur aktiven Regelung eines Schwingungsisolationssystems nach Anspruch 9, **dadurch gekennzeichnet, dass** Kompensationssignale ausschließlich auf Basis der Signale des zumindest einen Geophonsensors berechnet werden.

## Claims

1. An active vibration isolation system, comprising at least one geophone sensor, a control device, the control device being connected to the at least one geophone sensor and to at least one actuator for active vibration damping, wherein the geophone sensor is a capacitive sensor, wherein the geophone sensor is adapted to detect vibrations of the load to be isolated and to convert them to signals which are forwarded to the control device, wherein the control device calculates compensation signals for driving the actuator on the basis of the signals of the geophone sensor, wherein the geophone sensor is effective in a frequency range from at least 0.1 Hz, and wherein the control device generates correction signals for vibrations from at least 0.1 Hz.

2. The active vibration isolation system according to claim 1, **characterized in that** the geophone sensor is effective in a frequency range from at least 30 mHz.

3. The active vibration isolation system according to any of the preceding claims, **characterized in that** at 30 mHz the geophone sensor has a resolution of at least 10⁻⁷ m/s * Hz^{-1/2}.

4. The active vibration isolation system according to any of the preceding claims, **characterized in that** in a frequency range between 50 mHz and 30 Hz the geophone sensor has a resolution of at least 10⁻⁶ m/s * Hz^{-1/2}.

5. The active vibration isolation system according to any of the preceding claims, **characterized in that** the control device is able to calculate correction signals in at least three, preferably six degrees of freedom.

6. The active vibration isolation system according to any of the preceding claims, **characterized in that** the control device includes a digital or analog control loop for correcting the sensor signals and generates correction signals for vibrations from at least 1 mHz.

7. The active vibration isolation system according to any of the preceding claims, **characterized in that** the at least one geophone sensor is effective in a frequency range up to at least 30 Hz, preferably up to at least 50 Hz.

8. The active vibration isolation system according to any of the preceding claims, **characterized in that** the active control is accomplished exclusively by means of geophone sensors.

9. A method for actively controlling a vibration isolation system, in particular a vibration isolation system according to any of the preceding claims, comprising the steps of:
- measuring vibrations in a frequency range between at least 30 mHz and 50 Hz using at least one capacitive geophone sensor, wherein the measuring is exclusively based on the signals from the one or more geophone sensors;
- calculating compensation signals in at least three degrees of freedom;
- driving actuators for vibration compensation.

10. The method for actively controlling a vibration isolation system according to claim 9, **characterized in that** compensation signals are calculated exclusively on the basis of the signals from the at least one geophone sensor.

## Revendications

1. Système d'isolation actif contre les vibrations, comprenant au moins un géophone, un dispositif de régulation, le dispositif de régulation étant relié au ou aux géophones et à au moins un actionneur pour l'amortissement actif des vibrations, le géophone étant réalisé comme capteur capacitif, les vibrations de la charge à isoler étant détectées par le géophone et converties en signaux transmis au dispositif de régulation, le dispositif de régulation calculant à partir des signaux du géophone des signaux de compensation pour la commande de l'actionneur, le géophone étant actif dans une plage de fréquences à partir de 0,1 Hz au moins et le dispositif de régulation générant des signaux de correction pour des vibrations à partir de 0,1 Hz au moins.

2. Système d'isolation actif contre les vibrations selon la revendication 1, **caractérisé en ce que** le géophone est actif dans une plage de fréquences à partir de 30 mHz au moins.

3. Système d'isolation actif contre les vibrations selon l'une des revendications précédentes, **caractérisé en ce que** le géophone présente à 30 mHz une résolution de 10⁻⁷ m/s * Hz^{-1/2} au moins.

4. Système d'isolation actif contre les vibrations selon l'une des revendications précédentes, **caractérisé en ce que** le géophone présente dans une plage de fréquences entre 50 mHz et 30 Hz une résolution de 10⁻⁶ m/s * Hz^{-1/2} au moins.

5. Système d'isolation actif contre les vibrations selon l'une des revendications précédentes, **caractérisé en ce qu'**au moyen du dispositif de régulation, des signaux de correction sont calculables dans au moins trois, préférentiellement dans six degrés de liberté.

6. Système d'isolation actif contre les vibrations selon l'une des revendications précédentes, **caractérisé en ce que** le dispositif de régulation présente une boucle d'asservissement numérique ou analogique pour la correction des signaux de capteur, et des signaux de correction pour des vibrations à partir de 1 mHz au moins.

7. Système d'isolation actif contre les vibrations selon l'une des revendications précédentes, **caractérisé en ce que** le ou les géophones sont actifs dans une plage de fréquences jusqu'à 30 Hz au moins, préférentiellement jusqu'à 50 Hz au moins.

8. Système d'isolation actif contre les vibrations selon l'une des revendications précédentes, **caractérisé en ce que** la régulation active est exclusivement effectuée au moyen de géophones.

9. Procédé de régulation active d'un système d'isolation contre les vibrations, en particulier d'un système d'isolation contre les vibrations selon l'une des revendications précédentes, comprenant les étapes :
- de mesure des vibrations dans une plage de fréquences entre 30 mHz et 50 Hz au moins, au moyen d'au moins un géophone capacitif, la mesure des vibrations étant exclusivement effectuée sur la base des signaux du ou des géophones,
- de calcul de signaux de compensation dans au moins trois degrés de liberté,
- de commande d'actionneurs pour la compensation des vibrations.

10. Procédé de régulation active d'un système d'isolation contre les vibrations selon la revendication 9, **caractérisé en ce que** des signaux de compensation sont calculés exclusivement sur la base des signaux du ou des géophones.
